# EUROPEAN PATENT SPECIFICATION

(11) **EP 3 853 172 B1**
(45) Date of publication and mention of the grant of the patent: **05.07.2023**
(21) Application number: 19779698.0
(22) Date of filing: 18.09.2019
(51) Int. Cl.: C01B 6/13

(54) **METHODS FOR PREPARING ARYLPHOSPHINE-BORANE COMPLEXES**
VERFAHREN ZUR HERSTELLUNG VON ARYLPHOSPHOR-BORAN-KOMPLEXEN
MÉTHODES DE PRÉPARATION DE COMPLEXES ARYLPHOSPHINE-BORANE

(30) Priority: 21.09.2018 US 201862734500 P
(43) Date of publication of application: 28.07.2021
(73) Proprietor: Dow Global Technologies LLC, Midland, MI 48674 (US)
(72) Inventor: TU, Siyu, Midland, Michigan 48674 (US); KLINKENBERG, Jessica L., Collegeville, Pennsylvania 19426 (US); HE, Yiyong, Midland, Michigan 48674 (US); CHEN, Xiaoyun, Midland, Michigan 48674 (US); LI, Haoquan, Midland, Michigan 48674 (US); REMY, Matthew S., Midland, Michigan 48674 (US)
(74) Representative: Jewell, Catherine Mary
(86) International application number: PCT/US2019/051662
(87) International publication number: WO 2020/061151

(56) References cited:
- RU-C1- 2 223 277
- US-A- 2 892 873
- TSUNEO IMAMOTO ET AL: "Synthesis and reactions of phosphine-boranes. Synthesis of new bidentate ligands with homochiral phosphine centers via optically pure phosphine-boranes", J. AM. CHEM. SOC, vol. 112, 1 January 1990 (1990-01-01), pages 5244-5252, XP055644221,
- LAM H ET AL: "Mild reduction of chlorophosphine boranes to secondary phosphine boranes", TETRAHEDRON LETTERS, ELSEVIER LTD, AMSTERDAM, NL, vol. 44, no. 28, 7 July 2003 (2003-07-07), pages 5213-5216, XP004430949, ISSN: 0040-4039, DOI: 10.1016/S0040-4039(03)01225-5 cited in the application

## Description

### BACKGROUND

### Field

The present specification generally relates to methods for preparing borane complexes from aryldihalophosphines. In particular, the present specification is directed to methods for preparing borane complexes from aryldihalophosphines with a solution comprising sodium borohydride.

### Technical Background

Arylphosphines have potential uses as raw materials to commercial ligands in transition metal catalysis. However, phosphines are prone to oxidation and/or combustion, which make them dangerous to transport and handle. Accordingly, intermediary complexes of arylphosphines are formed that are less dangerous to transport and handle. The intermediary complexes can either be used in place of arylphosphines, or the intermediary complexes can be converted back to arylphosphines when they have safely been transported and/or handled. Intermediary complexes of arylphosphines that have been particularly useful are borane complexes of arylphosphines.

Unfortunately, known methods for preparing arylphosphines-borane complexes typically require borane reagents for production of arylphosphine-borane complexes. RU 2 223 277 C1 discloses a process for the preparation of alkyl (phenyl) phosphine-borane complexes of the general formula R2 PH· BH3 where R is aryl by reacting (diphenyl) chlorophosphines with complex hydride in an organic solvent medium.

TSUNEO IMAMOTO ET AL: "Synthesis and reactions of phosphine-boranes. Synthesis of new bidentate ligands with homochiral phosphine centers via optically pure phosphine-boranes", J. AM. CHEM. SOC, vol. 112, 1 January 1990 (1990-01-01), pages 5244-5252, discloses several processes for preparing phosphine-boranes. In some processes the starting phosphine is dichlorophenylphosphine reacted with LiAlH4 in various solvents

### SUMMARY

Herein disclosed are , methods for preparing phosphine-borane complexes from aryldihalophosphine comprise: mixing sodium borohydride (NaBH₄), a solvent comprising at least 50 volume percent (vol%) glycol ethers, and the aryldihalophosphine to obtain a solution; and maintaining the solution at a reaction temperature for a duration of time to obtain the phosphine-borane complexes.

According to embodiments, the glycol ethers comprises 1,2-dimethoxyethane, and the solvent further comprises tetrahydrofuran. In embodiments, a ratio of tetrahydrofuran to 1,2-dimethoxyethane in the solvent comprising may be from 0.1:1.0 to 2.5:1.0. In some embodiments, a ratio of sodium borohydride to aryldihalophosphine is from 1.1:1.0 to 2.5:1.0.

Additional features and advantages will be set forth in the detailed description which follows, and in part will be readily apparent to those skilled in the art from that description or recognized by practicing the embodiments described herein, including the detailed description which follows and the claims.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification.

### BRIEF DESCRIPTION OF THE DRAWINGS

FIG. 1 is a ¹H NMR spectrum and peak assignments for a 2,4-dimethoxyphenylphosphine-borane complex according to embodiments disclosed and described herein;
FIG. 2 is a ¹³C NMR spectrum and peak assignments for a 2,4-dimethoxyphenylphosphine-borane complex according to embodiments disclosed and described herein;
FIG. 3 is a ³¹P NMR spectrum for 2,4-dimethoxyphenylphosphine-borane complex (upper spectrum), 2,4-dimethoxyphenyl-P,P-dichlorophosphine (lower spectrum), and 2,4-dimethoxyphenylphospine (inset) according to embodiments disclosed and described herein; and
FIG. 4 is a ³¹P NMR spectrum for phenylphosphine-borane complex according to the embodiments disclosed and described herein.

### DETAILED DESCRIPTION

Common abbreviations are listed below:

**BH₃·THF:** borane tetrahydrofuran complex; **BH₃·SMe₂:** borane dimethyl sulfide; **NaBH₄:** sodium borohydride; **DME**: 1,2-dimethoxyethane; **THF**: tetrahydrofuran; **CDCl₃;** deuterated chloroform; **ZnCl₂:** zinc chloride; s: seconds; **ppm**: parts per million; **Hz**: hertz; **µsec:** microseconds; **mm**: millimeter; **g**: gram; **mmol**: millimolar; and **mL**: milliliter.

Aryl phosphine borane complexes are generally prepared in two steps: (1) reduction of an aryldichlorophosphine to a phosphine; and (2) subsequent reaction with a borane source such as borane tetrahydrofuran complex (BH₃·THF) or borane dimethyl sulfide (BH₃·SMe₂). However, these preparations are challenging for scale-up because of the instability of the BH₃·THF complex and the release of SMe₂ from the BH₃-SMe₂ complex. Another preparation route that has been considered and is used to form borane complexes with some phosphines include using sodium borohydride (NaBH₄). However, the use of NaBH₄ to reduce aryldihalophosphines is complicated by: (1) the insolubility of NaBH₄ in most aprotic solvents; and (2) the susceptibility of solvolysis of aryldihalophosphines by protic solvents. Additionally, common uses of NaBH₄ are able to utilize all of the reducing equivalents of BH₄⁻, but it is has been found herein that for aryldihalophosphines, that two molar equivalents of BH₄⁻ are required to fully reduce the aryldihalophosphine, suggesting that only one hydride equivalent is used for each BH₄⁻ molecule. Taking these considerations into account, methods for preparing phosphine-borane complexes from aryldihalophosphine according to embodiments disclosed and described herein comprise: mixing sodium borohydride (NaBH₄), a solvent comprising at least 50 vol% glycol ethers, and the aryldihalophosphine to obtain a solution; and maintaining the solution at a reaction temperature for a duration of time to obtain the phosphine-borane complexes.

As disclosed above, methods for preparing phosphine-borane complexes from aryldihalophosphine according to embodiments comprises mixing NaBH₄ and the aryldihalophosphine in a solvent comprising 50 vol% glycol ethers as from claim 1. . The NaBH₄ used in methods for preparing phosphine-borane complexes is not limited and can be commercially available NaBH₄. In some embodiments, the NaBH₄ is powdered NaBH₄ with a purity greater than 98%, such as greater than 99%. The aryldihalophosphine that is mixed with NaBH₄ to form an arylphosphine-borane complex is an aryldichlorophosphine selected from the group consisting of dichloro(2,4-dimethoxyphenyl)phosphine, dichloro(2-methoxyphenyl)phosphine, and dichlorophenylphosphine. The solvent used to prepare phosphine-borane complexes from aryldihalophosphine is, in embodiments, of particular importance. For instance, THF is a solvent that is commonly used to form phosphine-borane complexes. Traditionally, THF is used as the sole solvent for preparing phosphine-borane complexes. However, it was found that a solvent comprising THF alone will not produce a phosphine-borane complex with NaBH₄ and aryldihalophosphine, such as, for example, aryldichlorophosphine. The solution to this issue is not readily ascertainable. For example, Lam, Hubert et al., Mild Reduction of Chlorophosphine Boranes to Secondary Phosphine Boranes, 44 Tetrahedron Letters, 5213-5216 (2003) discloses that a preformed chlorophosphine-borane complex, generated by mixing the chlorophospine and BH₃•THF, produced a phosphine-borane complex by mixing NaBH₄ and diarylmonohalophosphine-borane complex in a solvent that only comprises THF (i.e., solvent is 100 vol% THF). However, as disclosed above, NaBH₄ and aryldihalophosphine will not form a phosphine-borane complex in a solvent that only comprises THF. This indicates that the chemistry involved in forming the phosphine-borane complexes with NaBH₄ and phosphines is complex and highly dependent on the structure of the phosphine and the composition of the solvent. Embodiments of methods for preparing phosphine-borane complexes from aryldihalophosphine disclosed and described herein address this issue, and provide methods for forming phosphine-borane complexes from aryldihalophosphine and NaBH₄.

According to embodiments, a phosphine-borane complex is prepared by mixing NaBH₄ and aryldihalophosphine in a solvent. According to some embodiments, a desired phosphine-borane complex may be formed by mixing NaBH₄ and aryldihalophosphine at an appropriate ratio. Without being bound to any particular theory, if not enough NaBH₄ is added to the solvent, phosphine-borane complexes will not be formed. However, if too much NaBH₄ is added to the solvent, undesired byproducts may be formed, and additional NaBH₄ must be separated from the product. According to some embodiments, a ratio of NaBH₄ to aryldichlorophosphine is from 1.1:1.0 to 2.5:1.0, such as from 1.2:1.0 to 2.5:1.0, from 1.3:1.0 to 2.5:1.0, from 1.4:1.0 to 2.5:1.0, from 1.5:1.0 to 2.5:1.0, from 1.6:1.0 to 2.5:1.0, from 1.7:1.0 to 2.5:1.0, from 1.8:1.0 to 2.5:1.0, from 1.9:1.0 to 2.5:1.0, from 2.0:1.0 to 2.5:1.0, from 2.1:1.0 to 2.5:1.0, from 2.2:1.0 to 2.5:1.0, from 2.3:1.0 to 2.5:1.0, or from 2.4:1.0 to 2.5:1.0. In embodiments a ratio of NaBH₄ to aryldichlorophosphine is from 1.1:1.0 to 2.4:1.0, such as from 1.1:1.0 to 2.3:1.0, from 1.1:1.0 to 2.2:1.0, from 1.1:1.0 to 2.1:1.0, from 1.1:1.0 to 2.0:1.0, from 1.1:1.0 to 1.9:1.0, from 1.1:1.0 to 1.8:1.0, from 1.1:1.0 to 1.7:1.0, from 1.1:1.0 to 1.6:1.0, from 1.1:1.0 to 1.5:1.0, from 1.1:1.0 to 1.4:1.0, from 1.1:1.0 to 1.3:1.0, or from 1.1:1.0 to 1.2:1.0. In embodiments, a ratio of NaBH₄ to aryldichlorophosphine is from 1.2:1.0 to 2.4:1.0, such as from 1.3:1.0 to 2.3:1.0, from 1.4:1.0 to 2.2:1.0, from 1.5:1.0 to 2.1:1.0, from 1.6:1.0 to 2.0:1.0, or from 1.7:1.0 to 1.9:1.0. In embodiments, a ratio of NaBH₄ to aryldichlorophosphine is from 1.5:1.0 to 2.2:1.0, such as from 1.6:1.0 to 2.1:1.0, from 1.7:1.0 to 2.0:1.0, or from 1.8:1.0 to 1.9:1.0.

Methods for preparing phosphine-borane complexes from aryldihalophosphine according to embodiments disclosed and described herein comprises mixing NaBH₄ and aryldihalophosphine in a solvent comprising at least 50 vol% glycol ethers, such as at least 55 vol% glycol ethers, at least 60 vol% glycol ethers, at least 65 vol% glycol ethers, at least 70 vol% glycol ethers, at least 75 vol% glycol ethers, at least 80 vol% glycol ethers, at least 85 vol% glycol ethers, at least 90 vol% glycol ethers, or at least 95 vol% glycol ethers. According to embodiments, the glycol ethers in the solvent comprise 1,2-dimethoxyethane (DME), In embodiments, the glycol ethers in the solvent comprise DME. Accordingly, in some embodiments, the solvent in which NaBH₄ and aryldihalophosphine is mixed may comprise at least 50 vol% DME, such as at least 55 vol% DME, at least 60 vol% DME, at least 65 vol% DME, at least 70 vol% DME, at least 75 vol% DME, at least 80 vol% DME, at least 85 vol% DME, at least 90 vol% DME, or at least 95 vol% DME.

As is apparent from the disclosure above, the solvent in which NaBH₄ and aryldihalophosphine are mixed comprises components other than glycol ethers. According to embodiments, the solvent in which NaBH₄ and aryldihalophosphine are mixed comprises tetrahydrofuran (THF), In embodiments, the solvent may comprise from 5 vol% to 50 vol% THF, such as from 10 vol% to 50 vol% THF, from 15 vol% to 50 vol% THF, from 20 vol% to 50 vol% THF, from 25 vol% to 50 vol% THF, from 30 vol% to 50 vol% THF, from 35 vol% to 50 vol% THF, from 40 vol% to 50 vol% THF, or from 45 vol% to 50 vol% THF. In some embodiments, the solvent may comprise from 5 vol% to 45 vol% THF, such as from 5 vol% to 40 vol% THF, from 5 vol% to 35 vol% THF, from 5 vol% to 30 vol% THF, from 5 vol% to 25 vol% THF, from 5 vol% to 20 vol% THF, from 5 vol% to 15 vol% THF, or from 5 vol% to 10 vol% THF. In embodiments, the solvent may comprise from 10 vol% to 45 vol% THF, such as from 15 vol% to 40 vol% THF, from 20 vol% to 35 vol% THF, or from 25 vol% to 30 vol% THF.

The solvent in which NaBH₄ and aryldihalophosphine are mixed comprises a mixture of DME and THF. The solvent in which NaBH₄ and aryldihalophosphine is mixed comprises a ratio of THF to DME from 0.1:1.0 to 2.5:1.0, such as from 0.2:1.0 to 2.5:1.0, from 0.3:1.0 to 2.5:1.0, from 0.4:1.0 to 2.5:1.0, from 0.5:1.0 to 2.5:1.0, from 0.6:1.0 to 2.5:1.0, from 0.7:1.0 to 2.5:1.0, from 0.8:1.0 to 2.5:1.0, from 0.9:1.0 to 2.5:1.0, from 1.0:1.0 to 2.5:1.0, from 1.1:1.0 to 2.5:1.0, from 1.2:1.0 to 2.5:1.0, from 1.3:1.0 to 2.5:1.0, from 1.4:1.0 to 2.5:1.0, from 1.5:1.0 to 2.5:1.0, from 1.6:1.0 to 2.5:1.0, from 1.7:1.0 to 2.5:1.0, from 1.8:1.0 to 2.5:1.0, from 1.9:1.0 to 2.5:1.0, from 2.0:1.0 to 2.5:1.0, from 2.1:1.0 to 2.5:1.0, from 2.2:1.0 to 2.5:1.0, from 2.3:1.0 to 2.5:1.0, or from 2.4:1.0 to 2.5:1.0. In some embodiments, the solvent in which NaBH₄ and aryldihalophosphine is mixed comprises a ratio of THF to DME from 0.1:1.0 to 2.4:1.0, such as from 0.1:1.0 to 2.3:1.0, from 0.1:1.0 to 2.2:1.0, from 0.1:1.0 to 2.2:1.0, from 0.1:1.0 to 2.1:1.0, from 0.1:1.0 to 2.0:1.0, from 0.1:1.0 to 1.9:1.0, from 0.1:1.0 to 1.8:1.0, from 0.1:1.0 to 1.7:1.0, from 0.1:1.0 to 1.6:1.0, from 0.1:1.0 to 1.5:1.0, from 0.1:1.0 to 1.4:1.0, from 0.1:1.0 to 1.3:1.0, from 0.1:1.0 to 1.2:1.0, from 0.1:1.0 to 1.1:1.0, from 0.1:1.0 to 1.0:1.0, from 0.1:1.0 to 0.9:1.0, from 0.1:1.0 to 0.8:1.0, from 0.1:1.0 to 0.7:1.0, from 0.1:1.0 to 0.6:1.0, from 0.1:1.0 to 0.5:1.0, from 0.1:1.0 to 0.4:1.0, from 0.1:1.0 to 0.3:1.0, or from 0.1:1.0 to 0.2:1.0. In one or more embodiments, the solvent in which NaBH₄ and aryldihalophosphine is mixed comprises a ratio of THF to DME from 0.2:1.0 to 2.4:1.0, such as from 0.3:1.0 to 2.3:1.0, from 0.4:1.0 to 2.2:1.0, from 0.5:1.0 to 2.1:1.0, from 0.6:1.0 to 2.0:1.0, from 0.7:1.0 to 1.9:1.0, from 0.8:1.0 to 1.8:1.0, from 0.9:1.0 to 1.7:1.0, from 1.0:1.0 to 1.6:1.0, from 1.1:1.0 to 1.5:1.0, or from 1.2:1.0 to 1.4:1.0. In embodiments, the solvent in which NaBH₄ and aryldihalophosphine is mixed comprises a ratio of THF to DME from 0.1:1.0 to 1.0:1.0, such as from 0.2:1.0 to 0.9:1.0, from 0.3:1.0 to 0.8:1.0, from 0.4:1.0 to 0.7:1.0, or from 0.5:1.0 to 0.7:1.0.

According to embodiments, NaBH₄ and aryldihalophosphine may be mixed by adding each as a dry component to a solvent that comprises at least 50 vol% glycol ethers. In some embodiments, NaBH₄ may be added to a first solvent to form a first suspension, and aryldihalophosphine may be added to a second solvent to form a second suspension. In such embodiments, the first suspension and the second suspension are combined, which results in mixing the NaBH₄ and aryldihalophosphine. In various embodiments, the first solvent and the second solvent may be the same or different. In embodiments where the first solvent and the second solvent are the same, each of the first solvent and the second solvent may comprise at least 50 vol% glycol ethers so that when the first suspension and the second suspension are combined, the combined solvent comprises at least 50 vol% glycol ethers. In embodiments where the first solvent and the second solvent are different, the composition of the first solvent and the composition of the second solvent should be formulated such that when the first suspension and the second suspension are combined, the combined solvent comprises at least 50 vol% glycol ethers. It should be understood that a skilled artisan is capable of formulating the first solvent and the second solvent so that when the first suspension and the second suspension are combined, the combined solvent comprises at least 50 vol% glycol ethers. Thus, in one or more embodiments, at least one of the first solvent and/or the second solvent comprises at least 50 vol% glycol ethers. In embodiments, at least one of the first solvent and/or the second solvent comprises THF. In embodiments, the first solvent and the second solvent are formulated to yield the THF to DME ratios disclosed herein.

As disclosed above, embodiments of methods for preparing phosphine borane complexes disclosed and described herein comprise mixing NaBH₄ and aryldihalophosphine in a solvent comprising at least 50 vol% glycol ethers to obtain a solution, and maintaining the solution at a reaction temperature. In embodiments, the reaction temperature may be from 0 °C to 60 °C, such as from 5 °C to 60 °C, from 10 °C to 60 °C, from 15 °C to 60 °C, from 20 °C to 60 °C, from 25 °C to 60 °C, from 30 °C to 60 °C, from 35 °C to 60 °C, from 40 °C to 60 °C, from 45 °C to 60 °C, from 50 °C to 60 °C, or from 55 °C to 60 °C. In some embodiments, the reaction temperature may be from 0 °C to 55 °C, such as from 0 °C to 50 °C, from 0 °C to 45 °C, from 0 °C to 40 °C, from 0 °C to 35 °C, from 0 °C to 30 °C, from 0 °C to 25 °C, from 0 °C to 20 °C, from 0 °C to 15 °C, from 0 °C to 10 °C, or from 0 °C to 5 °C. In embodiments, the reaction temperature may be from 5 °C to 55 °C, such as from 10 °C to 50 °C, from 15 °C to 45 °C, from 20 °C to 40 °C, or from 20 °C to 35 °C.

In some embodiments, the solvent may be adjusted to the reaction temperature before NaBH₄ and/or aryldihalophosphine is added to the solvent. In embodiments, NaBH₄ and/or aryldihalophosphine may be added to the solvent at ambient temperature and the mixture of NaBH₄, aryldihalophosphine, and solvent are adjusted to the reaction temperature. In embodiments, NaBH₄ is added to a first solvent to form a first suspension and aryldihalophosphine is added to a second solvent to form a second suspension, the first solvent and/or the second solvent may be adjusted to the reaction temperature before the NaBH₄ and/or aryldihalophosphine is added to the first solvent and/or second solvent, respectively. In some embodiments, NaBH₄ is added to a first solvent at ambient temperature to form a first suspension and/or aryldihalophosphine is added to a second solvent at ambient temperature to form a second suspension, and the first suspension and/or the second suspension may be adjusted to the reaction temperature after the NaBH₄ and/or aryldihalophosphine is added to the first solvent and/or second solvent, respectively. In some embodiments, NaBH₄ is added to a first solvent at ambient temperature to form a first suspension and/or aryldihalophosphine is added to a second solvent at ambient temperature to form a second suspension, the first suspension and the second suspension may be combined at ambient temperature to form a combined solution, and the combined solution may be adjusted to the reaction temperature. The temperature of any of the solvents or suspensions disclosed herein may be adjusted to the reaction temperature by any suitable mechanism for adjusting the temperature of solutions or suspensions.

As disclosed herein, according to embodiments for preparing phosphine-borane complexes from aryldihalophosphine, the solution comprising NaBH₄, aryldihalophosphine, and a solvent comprising at least 50 vol% glycol ethers is maintained at the reaction temperature for a duration of time. In embodiments, the duration of time is from 0.05 hours to 12.00 hours, such as from 0.10 hours to 12.00 hours, from 0.50 hours to 12.00 hours, from 1.00 hours to 12.00 hours, from 1.50 hours to 12.00 hours, from 2.00 hours to 12.00 hours, from 2.50 hours to 12.00 hours, from 3.00 hours to 12.00 hours, from 3.50 hours to 12.00 hours, from 4.00 hours to 12.00 hours, from 4.50 hours to 12.00 hours, from 5.00 hours to 12.00 hours, from 5.50 hours to 12.00 hours, from 6.00 hours to 12.00 hours, from 6.50 hours to 12.00 hours, from 6.50 hours to 12.00 hours, from 7.00 hours to 12.00 hours, from 7.50 hours to 12.00 hours, from 8.00 hours to 12.00 hours, from 8.50 hours to 12.00 hours, from 9.00 hours to 12.00 hours, from 9.50 hours to 12.00 hours, from 10.00 hours to 12.00 hours, from 10.50 hours to 12.00 hours, from 11.00 hours to 12.00 hours, or from 11.50 hours to 12.00 hours. In some embodiments, the duration of time is from 0.05 hours to 11.50 hours, such as from 0.05 hours to 11.00 hours, from 0.05 hours to 10.50 hours, from 0.05 hours to 10.00 hours, from 0.05 hours to 9.50 hours, from 0.05 hours to 9.00 hours, from 0.05 hours to 8.50 hours, from 0.05 hours to 8.00 hours, from 0.05 hours to 7.50 hours, from 0.05 hours to 7.00 hours, from 0.05 hours to 6.50 hours, from 0.05 hours to 6.00 hours, from 0.05 hours to 5.50 hours, from 0.05 hours to 5.00 hours, from 0.05 hours to 4.50 hours, from 0.05 hours to 4.00 hours, from 0.05 hours to 3.50 hours, from 0.05 hours to 3.00 hours, from 0.05 hours to 2.50 hours, from 0.05 hours to 2.00 hours, from 0.05 hours to 1.50 hours, from 0.05 hours to 1.00 hours, from 0.05 hours to 0.50 hours, or from 0.05 hours to 0.10 hours. In embodiments, the duration of time is from 0.10 hours to 11.50 hours, such as from 0.50 hours to 11.00 hours, from 1.00 hours to 10.50 hours, from 1.50 hours to 10.00 hours, from 2.00 hours to 9.50 hours, from 2.50 hours to 9.00 hours, from 3.00 hours to 8.50 hours, from 3.50 hours to 8.00 hours, from 4.00 hours to 7.50 hours, from 4.50 hours to 7.00 hours, from 5.00 hours to 6.50 hours, or from 5.50 hours to 6.00 hours. In some embodiments, the reaction time is from 0.10 hours to 2.00 hours, such as from 0.50 hours to 1.50 hours, or 1.00 hour.

Methods for preparing phosphine-borane complexes from aryldihalophosphine, according to embodiments, comprise mixing NaBH₄, a solvent comprising at least 50 vol% DME, and aryldichlorophosphine to obtain a solution; and maintaining the solution at a reaction temperature for a duration of time to obtain the phosphine-borane complexes. In embodiments, the solvent further comprises THF.

Methods for preparing phosphine-borane complexes from aryldihalophosphine, according to embodiments, comprise obtaining a solution comprising NaBH₄ suspended in a solvent comprising at least 50 vol% DME; adjusting a temperature of the solution to a reaction temperature; obtaining a combined solution by combining the solution with a second solution, wherein the second solution comprises aryldichlorophosphine and a second solvent; and maintaining the combined solution at the reaction temperature for a duration of time to obtain the phosphine-borane complexes. The solvent further comprises THF. The second solvent comprises THF.

According to embodiments the conversion of the aryldihalophosphine in a solution comprising NaBH₄ and at least 50 vol% glycol ethers to arylphosphine-borane complexes is at least 90%, such as at least 91%, at least 92%, at least 93%, at least 94%, at least 95%, at least 96%, at least 97%, at least 98%, or at least 99%. In some embodiments, the conversion of the aryldihalophosphine in a solution comprising NaBH₄ and at least 50 vol% glycol ethers to arylphosphine-borane complexes is 100%.

### EXAMPLES

Embodiments will be further clarified by the following examples Examples 1-3, 5 are comparative, Example 4 is according with the invention.

### EXAMPLE 1

Dichloro(2,4-dimethoxyphenylphosphine) was prepared using Friedel-Crafts reaction using anhydrous technical grade ZnCl₂ as the catalyst, which was not further purified prior to the reduction reaction.

In a three-neck flask, 30 ml DME (>99% purity obtained from Sigma Aldrich) was loaded and cooled to 0 °C. One gram (g) of NaBH₄ solid (>98% purity powder obtained from Sigma Aldrich) was loaded into the flask, and a small temperature increase of 2 °C was observed. Subsequently, 2.46 g (8.6 millimolar (mmol)) dichloro(2,4-dimethoxyphenylphosphine) (84% purity) diluted in 8 milliliter (mL) N₂ sparged DME was slowly added to the flask at a temperature ranging from 2 °C to 6 °C. The mixture was maintained at 2 °C for a duration of half an hour (0.50 hours). Next, 20 ml hexane was added to the flask and more solid precipitated out. The white slurry was filtered and the solid was washed by an additional 20 ml of hexane. The filtrate turned hazy, which was then filtered again to remove the solid. The solvent was removed and led to a white solid, which was further dried in the vacuum oven at 40 °C. The yield of the 2,4-dimethoxyphenylphosphine)-borane complex was 1.62 g (82%).

The 2, 4-dimethoxyphenylphosphine-borane complex was dissolved in deuterated chloroform (CDCl₃) in a 5 mm NMR tube. ¹³C NMR experiment was performed on a Bruker Avance 400 NMR spectrometer equipped with a 10 mm C/H DUAL cryoprobe. Both inversegated quantitative ¹³C NMR and DEPT-135 experiments were performed without sample spinning. Data were processed using MNOVA software with a 1 Hz lining broadening. The following is the setup of acquisition parameters:

| | |
|---|---|
| Temperature: | 25 °C |
| Solvent: | CDCl₃ |
| Acquisition: | 1024 scans |
| Spectrum reference: | 77.3 ppm for solvent |
| Relaxation delay: | 30 s |
| Spectrum center: | 100 ppm |
| 90 ° pulse length: | 11.0 *µs* |
| Spectral width: | 250 ppm |

Standard quantitative ¹H NMR experiments were performed without sample spinning on the same instrument. Data were processed using MNOVA software with a 0.5 Hz lining broadening. The following is the setup of acquisition parameters:

| | |
|---|---|
| Temperature: | 25 °C |
| Solvent: | CDCl₃ |
| Acquisition: | 16 scans |
| Spectrum reference: | 7.27 ppm for solvent |
| Relaxation delay: | 30 s |
| Spectrum center: | 5 ppm |
| 90 ° pulse length: | 17.2 *µs* |
| Spectral width: | 20 ppm |

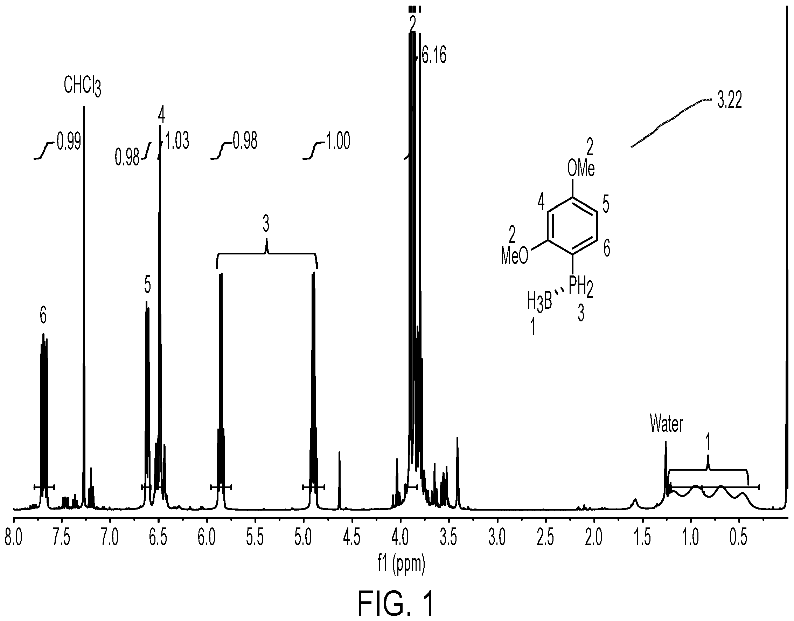

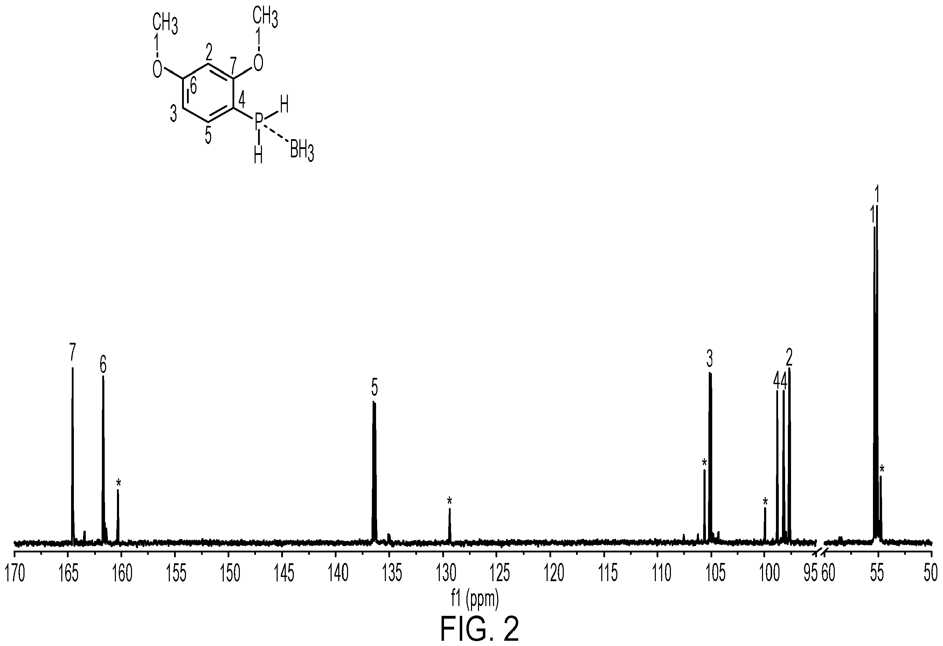

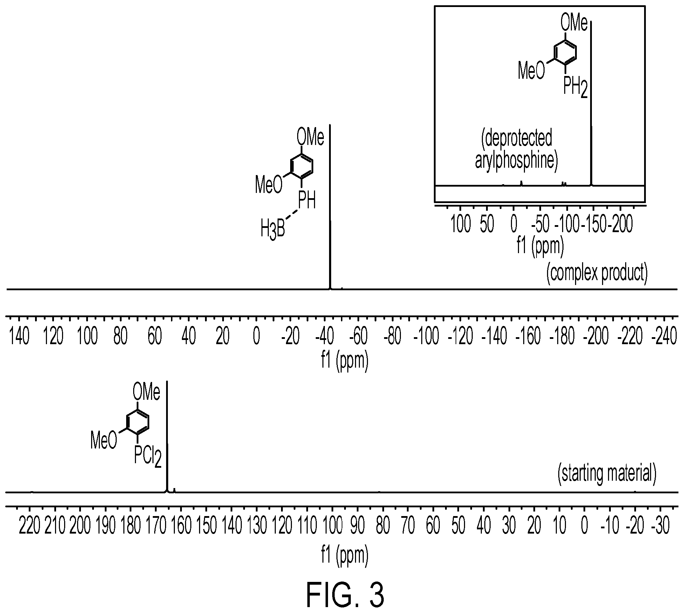

¹H NMR spectrum is shown in FIG. 1. By the peak intensity ratio, every aromatic ring has three BH₃ protons associated with it. The three bond H-B-P-H vicinal coupling was clearly observed (quartets at 5.85 and 4.90 ppm), providing direct evidence of 2, 4-dimethoxyphenylphosphine-borane complex. Purity of the product was demonstrated by ¹³C NMR spectrum in FIG. 2, where the unassigned peaks (labeled with asterisks) are from the unreacted dimethoxybenzene carried over from the first step reaction. The conversion of dichloro(2, 4-dimethoxy)phenylphosphine to 2, 4-dimethoxyphenylphosphine-borane complex is almost complete, indicating by negligible byproduct peaks. In FIG. 3, the starting dichloro(2,4-dimethoxphenyl)phosphine has a peak at 166 ppm. After forming the phenylphosphine-borane complex, the peak is shifted to -43 ppm. As a reference for comparison, the phenylphosphine without complex has a chemical shift at -146 ppm, which is shown in the inset of FIG. 3.

### EXAMPLE 2

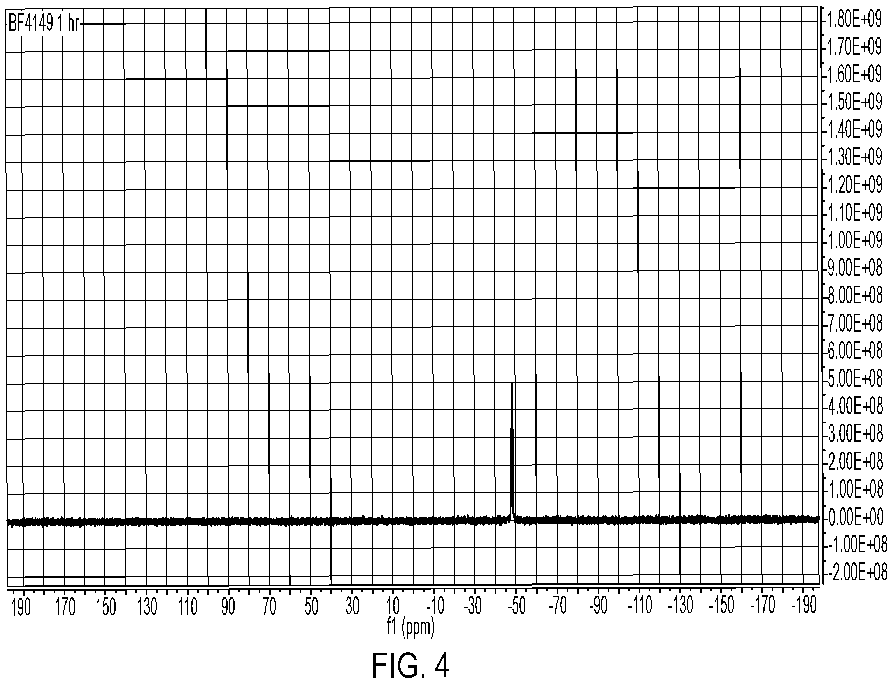

In a three-neck flask, 16 ml DME as was used in Example 1 was loaded and cooled to 0 °C and sparged with N₂ for 0.50 hours. Subsequently, 0.5 g of NaBH₄ solid was loaded into the flask. Then, 0.9 g (5 mmol) dichlorophenylphosphine as obtained from a commercial supplier was diluted in 4 ml N₂ sparged DME was slowly added to the flask at a temperature range from 1 °C to 7 °C. The mixture was maintained at 2 °C for one hour. An NMR sample obtained as outlined in Example 1 indicated the full conversion of dichloro((phenyl)phosphine to phenylphosphine-borane complex. This is evident form the single P peak on NMR graph shown in FIG. 4 at -49 ppm. The starting material, dichloro(phenyl)phosphine, ³¹P NMR resonance is observed at 163 ppm, and the decomplexed phenylphosphine ³¹P NMR resonance is observed at -122 ppm.

### EXAMPLE 3

In a three-neck flask, 15 ml of DME was loaded. Subsequently, 0.5 g of NaBH₄ solid was loaded into the flask. A solution of 1.16 g (4.3 mmol) dichloro(2,4-dimethoxyphenylphosphine) (89% purity) obtained as in Example 1 in 4 ml N₂ sparged DME was prepared. The dichloro(2,4-dimethoxyphenylphosphine) solution was added into mixtures of DME and NaBH₄. The NaBH₄ mixtures were set at 0 °C, 30 °C, and 60 °C. After the addition of dichloro(2, 4-dimethoxyphenylphosphine) was complete, the reactions were kept at the respective temperatures for 4 hours. The resulting solutions were quenched with water, and analyzed by ³¹P NMR using tri(ortho-tolyl)phosphine as an internal standard. Table 1 below shows the results of this example and the effect of temperature on the preparation of phosphine-borane complexes.

**Table 1**

| **Reaction Temperature** | **Percent Yield of 2,4-dimethoxyphenylphosphine** |
|---|---|
| 0 °C | 62-74 % |
| 30 °C | 81% |
| 60 °C | 82% |

As can be seen from Table 1, there is a sharp increase in percentage yield as the reaction temperature increases from 0 °C to 30 °C, but the increase in percentage yield is not as pronounced as the reaction temperature increases from 30 °C to 60 °C. This indicates that temperatures above 60 °C do not provide significant improvements in percentage yield. The range of yields observed at 0 °C were measured across three independent reactions.

### EXAMPLE 4

In a three-neck flask, a total of 15 ml THF and DME was loaded at the THF to DME ratios shown in Table 2 below. Subsequently, 0.5 g of NaBH₄ solid was loaded into the flask. Then, 1.16 g (4.3 mmol) dichloro(2, 4-dimethoxyphenylphosphine) (89% purity) as obtained in Example 1 and diluted in 4 ml N₂ sparged THF was slowly added to the flask at 23 °C. The reactions were sampled at 25 minutes and 16 hours after this THF addition was complete, and the samples were analyzed by ³¹P NMR. Table 2 shows the effect of the THF to DME ratio on percentage yield.

**Table 2**

| **Volume Ratio of THF to DME in NaBH4 Suspension** | **Percentage Yield of 2,4-dimethoxyphenylphosphine complex after 25 minutes** | **Percentage Yield of 2,4-dimethoxyphenylphosphine complex after 16 hours** |
|---|---|---|
| 10:1 | Not Observed | Not Observed |
| 3:1 | Not Observed | Not Observed |
| 1:1 | 86% | 94% |

As shown in Table 2, THF to DME ratios of 3:1 and above do not provide an observable yield of 2,4-dimethoxyphenylphosphine complex, but the yield of 2,4-dimethoxyphenylphosphine complex increases significantly from a THF to DME ratio of 3:1 to a THF to DME ratio of 1:1.

### EXAMPLE 5

NaBH₄ in an appropriate amount based on desired molar ratio to 2,4-(dimethoxyphenyl)dichlorophosphine (ArPCl₂) as shown in Table 3 below was added to a three-neck round bottom flask equipped with a condenser, thermometer and a septa. This flask was evacuated under vacuum and refilled with N₂ three times before DME (2.27 g) was added *via* syringe. 5.62 g of a 17.0 weight percent (wt%) ArPCl₂ stock solution (with ArPCl₂ 0.962 g, 4.09 mmol) was added to the vial *via* syringe over a period of 0.5 hour and left stirring at room temperature overnight. Table 3 shows the results of this test.

**Table 3**

| **NaBH₄/ArPCl₂** | **Percentage Yield of Phosphine-Borane Complex** |
|---|---|
| 1:2 | 0%^{a} |
| 1:1 | 25%^{a} |
| 2.2:1 | 100%^{b} |

| | |
|---|---|
| ^{a} GC yield with dodecane as internal standard; ^{b}NMR yield | |

As shown in Table 3, the percentage yield of phosphine-borane complexes increases sharply as the ratio of NaBH₄ to ArPCl₂ increases from 1:1 to 2.2:1

## Claims

1. A method for preparing phosphine-borane complexes from aryldihalophosphine comprising:
mixing sodium borohydride, a solvent comprising at least 50 vol% glycol ethers, and the aryldihalophosphine to obtain a solution; and
maintaining the solution at a reaction temperature for a duration of time to obtain the phosphine-borane complexes, wherein the reaction temperature is from 0 °C to 60 °C;
wherein the aryldihalophosphine is selected from the group consisting of dichloro(2,4-dimethoxyphenyl)phosphine, dichloro(2-methoxyphenyl)phosphine, and dichlorophenylphosphine;
wherein the solvent comprising at least 50 vol% glycol ethers further comprises tetrahydrofuran, wherein the glycol ethers comprises 1,2-dimethoxyethane, and wherein a ratio of tetrahydrofuran to 1,2-dimethoxyethane in the solvent comprising at least 50 vol% glycol ethers is from 0.1:1.0 to 2.5:1.0.

2. The method of claim 1, wherein the solution is adjusted to the reaction temperature.

3. The method of claim 1, wherein mixing the sodium borohydride, the solvent comprising at least 50 vol% glycol ethers, and the aryldihalophosphine comprises adding the sodium borohydride and aryldihalophosphine to the solvent comprising at least 50 vol% glycol ethers, and
the solvent comprising at least 50 vol% glycol ethers is adjusted to the reaction temperature before adding the sodium borohydride and aryldihalophosphine to the solvent comprising at least 50 vol% glycol ethers.

4. The method of claim 1, wherein a ratio of tetrahydrofuran to 1,2-dimethoxyethane the solvent comprising at least 50 vol% glycol ethers is from 0.1:1.0 to 1.0: 1.0.

5. The method of any one of claims 1 to 4, wherein a ratio of sodium borohydride to aryldihalophosphine is from 1.1:1.0 to 2.5:1.0.

6. The method of any one of claims 1 to 5, wherein wherein a ratio of sodium borohydride to aryldihalophosphine is from 1.5:1.0 to 2.2:1.0.

7. The method of any one of claims 1 to 6, wherein the duration of time is from 0.05 hours to 12.00 hours.

## Patentansprüche

1. Verfahren zum Herstellen von Phosphinborankomplexen aus Aryldihalogenphosphin, umfassend:
Mischen von Natriumborhydrid, einem Lösungsmittel, umfassend mindestens zu 50 Vol.-% Glykolether, und dem Aryldihalogenphosphin, um eine Lösung zu erhalten; und
Aufrechterhalten der Lösung bei einer Reaktionstemperatur für eine Zeitdauer, um die Phosphinborankomplexe zu erhalten, wobei die Reaktionstemperatur von 0 °C bis 60 °C beträgt;
wobei das Aryldihalogenphosphin ausgewählt ist aus der Gruppe bestehend aus Dichlor(2,4-dimethoxyphenyl)phosphin, Dichlor(2-methoxyphenyl)phosphin und Dichlorphenylphosphat;
wobei das Lösungsmittel mindestens zu 50 Vol.-% Glykolether umfasst, ferner Tetrahydrofuran umfasst, wobei die Glykolether 1,2-Dimethoxyethan umfassen, und wobei ein Verhältnis von Tetrahydrofuran zu 1,2-Dimethoxyethan in dem Lösungsmittel, umfassend mindestens zu 50 Vol.-% Glykolether von 0,1:1,0 bis 2,5:1,0 beträgt.

2. Verfahren nach Anspruch 1, wobei die Lösung auf die Reaktionstemperatur eingestellt wird.

3. Verfahren nach Anspruch 1, wobei das Mischen des Natriumborhydrids, des Lösungsmittels, umfassend mindestens zu 50 Vol.-% Glykolether, und des Aryldihalogenphosphins ein Zugeben des Natriumborhydrids und des Aryldihalogenphosphins zu dem Lösungsmittel, umfassend mindestens zu 50 Vol.-% Glykolether, umfasst, und
das Lösungsmittel, umfassend mindestens zu 50 Vol.-% Glykolether, auf die Reaktionstemperatur eingestellt wird, bevor das Natriumborhydrid und das Aryldihalogenphosphin zu dem Lösungsmittel, umfassend mindestens zu 50 Vol.-% Glykolether, zugegeben werden.

4. Verfahren nach Anspruch 1, wobei ein Verhältnis von Tetrahydrofuran zu 1,2-Dimethoxyethan in dem Lösungsmittel, umfassend mindestens zu 50 Vol.-% Glykolether, von 0,1:1,0 bis 1,0:1,0 beträgt.

5. Verfahren nach einem der Ansprüche 1 bis 4, wobei ein Verhältnis von Natriumborhydrid zu Aryldihalogenphosphin von 1,1:1,0 bis 2,5:1,0 beträgt.

6. Verfahren nach einem der Ansprüche 1 bis 5, wobei wobei ein Verhältnis von Natriumborhydrid zu Aryldihalogenphosphin von 1,5:1,0 bis 2,2:1,0 beträgt.

7. Verfahren nach einem der Ansprüche 1 bis 6, wobei die Zeitdauer von 0,05 Stunden bis 12,00 Stunden beträgt.

## Revendications

1. Procédé de préparation de complexes phosphine-borane à partir d'aryldihalophosphine comprenant :
le mélange de borohydrure de sodium, d'un solvant comprenant au moins 50 % en volume d'éthers de glycol, et de l'aryldihalophosphine afin d'obtenir une solution ; et
le maintien de la solution à une température de réaction pendant un laps de temps afin d'obtenir les complexes phosphine-borane, dans lequel la température de réaction va de 0 °C à 60 °C ;
dans lequel l'aryldihalophosphine est choisie dans le groupe constitué par la dichloro(2,4-diméthoxyphényl)phosphine, la dichloro(2-méthoxyphényl)phosphine, et la dichlorophénylphosphine ;
dans lequel le solvant comprenant au moins 50 % en volume d'éthers de glycol comprend en outre du tétrahydrofurane, dans lequel les éthers de glycol comprennent du 1,2-diméthoxyéthane, et dans lequel un rapport du tétrahydrofurane au 1,2-diméthoxyéthane dans le solvant comprenant au moins 50 % en volume d'éthers de glycol va de 0,1:1,0 à 2,5:1,0.

2. Procédé selon la revendication 1, dans lequel la solution est ajustée à la température de réaction.

3. Procédé selon la revendication 1, dans lequel le mélange du borohydrure de sodium, du solvant comprenant au moins 50 % en volume d'éthers de glycol, et de l'aryldihalophosphine comprend l'addition du borohydrure de sodium et de l'aryldihalophosphine au solvant comprenant au moins 50 % en volume d'éthers de glycol, et
le solvant comprenant au moins 50 % en volume d'éthers de glycol est ajusté à la température de réaction avant d'ajouter le borohydrure de sodium et l'aryldihalophosphine au solvant comprenant au moins 50 % en volume d'éthers de glycol.

4. Procédé selon la revendication 1, dans lequel un rapport du tétrahydrofurane au 1,2-diméthoxyéthane le solvant comprenant au moins 50 % en volume d'éthers de glycol va de 0,1:1,0 à 1,0:1,0.

5. Procédé selon l'une quelconque des revendications 1 à 4, dans lequel un rapport du borohydrure de sodium à l'aryldihalophosphine va de 1,1:1,0 à 2,5:1,0.

6. Procédé selon l'une quelconque des revendications 1 à 5, dans lequel dans lequel un rapport du borohydrure de sodium à l'aryldihalophosphine va de 1,5:1,0 à 2,2:1,0.

7. Procédé selon l'une quelconque des revendications 1 à 6, dans lequel le laps de temps va de 0,05 heure à 12,00 heures.
